(19) Europäisches Patentamt
European Patent Office
Office européen des brevets

(11) Veröffentlichungsnummer : **0 056 501**
**B1**

(12) # EUROPÄISCHE PATENTSCHRIFT

(45) Veröffentlichungstag der Patentschrift : **02.05.84**

(51) Int. Cl.³ : **C 09 K 3/34**

(21) Anmeldenummer : **81201335.7**

(22) Anmeldetag : **09.12.81**

(54) **Flüssigkristallmischung.**

(30) Priorität : **19.01.81 CH 316/81**

(43) Veröffentlichungstag der Anmeldung : **28.07.82 Patentblatt 82/30**

(45) Bekanntmachung des Hinweises auf die Patenterteilung : **02.05.84 Patentblatt 84/18**

(84) Benannte Vertragsstaaten : **CH DE GB LI**

(56) Entgegenhaltungen :
**EP-A- 0 028 519**
**DE-A- 2 745 050**
**DE-A- 2 907 213**
**GB-A- 2 023 136**

(73) Patentinhaber : **Merck Patent Gesellschaft mit beschränkter Haftung**
**Frankfurter Strasse 250**
**D-6100 Darmstadt (DE)**

(72) Erfinder : **Osman, Maged A., Dr.**
**Lerchenrain 1**
**CH-8046 Zürich (CH)**
Erfinder : **Schad, Hanspeter, Dr.**
**Boldistrasse 6**
**CH-5414 Rieden (CH)**

**EP 0 056 501 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Fluessigkristallmischung

Die Erfindung betrifft Fluessigkristall-(FK)-Mischungen zum Betrieb von Drehzellen, d. h. FK-Anzeigen mit verdrillter nematischer Phase und mit positiver dielektrischer Anisotropie (im folgenden auch kurz als DKA oder $\Delta\varepsilon$ bezeichnet) der FK-Mischung, insbesondere fuer den sogenannten Multiplexbetrieb der Drehzelle.

Bekannte FK-Mischungen dieser Art fuer Multiplexbetrieb sind z. B. in den DE-A 28 54 310 und 29 34 918 beschrieben, wo auch die wesentlichen Parameter des Multiplexbetriebes dargelegt sind.

Im Zusammenhang mit dem Multiplexbetrieb ist es ferner bekannt (siehe J. Nehring, III, Liqu. Cryst. Conference of Socialist Countries, 1979), dass die beispielsweise in Fig. 8 der oben genannten DE-OS 29 34 918 erlaeuterte Kontrastkennlinie (Helligkeits/Steuerspannungsdiagramm) moeglichst steil sein soll und dies dadurch erreicht werden kann, dass man den Wert des Verhaeltnisses der Elastizitaetskonstanten fuer Biegung ($k_{33}$) zur Elastizitaetskonstanten fuer Spreizung ($k_{11}$), d. h. den Bruch $k_{33}/k_{11}$, sowie den Wert des Verhaeltnisses der DKA ($\Delta\varepsilon$) zur dielektrischen Konstanten senkrecht zur nematischen Achse ($\varepsilon_\perp$), d. h. den Bruch $\Delta\varepsilon/\varepsilon_\perp$, so klein wie moeglich waehlt. In der Praxis ist dabei der fuer ein Anzeigesystem erforderlicher Wert der DKA praktisch festgelegt, weil die meist verwendeten Stromquellen (Batterien) bzw. Bausteine (C-MOS) eine definierte Schwellenspannung erfordern.

Die z. B. aus den oben genannten DE-A bekannten FK-Mischungen fuer Multiplexbetrieb koennen allgemein als Mischungen einer schwach polaren oder unpolaren (d. h. DKA $\leq 3$) anisotropen nitrilfreien Komponente (A) und einer stark polaren (DKA $\geq 4$) anisotropen Nitrilkomponente (B) mit folgenden Grundstrukturen aufgefasst werden :

(A) 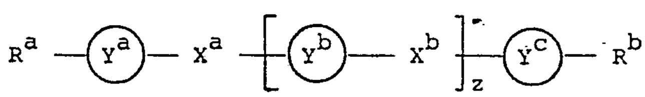

(B) 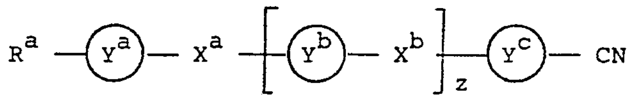

in welchen die Gruppen $R^a$ und $R^b$ Alkyl-, Alkoxy- oder Alkylcarbonylgruppen mit 1 bis 10 C-Atomen im Alkylteil bedeuten und die Ringe $Y^a$, $Y^b$ und $Y^c$ sechsgliedrige Ringe, wie Phenylen- oder Cyclohexylengruppen darstellen, die jeweils an ihren Parapositionen mit der Kette von (A) bzw. (B) verbunden sind. Die Verbindungen (A) bzw. (B) koennen zweikernige oder dreikernige Verbindungen sein, d. h. z ist Null oder Eins, und die Brueckenglieder $X^a$ und $X^b$ sind Carboxylgruppen, Azomethingruppen (—CH=N—), Kovalenzbindungen (–) oder Carbonylthio-(—C(O)S—)-Gruppen.

Die hoechstens schwach polaren Verbindungen (A) besitzen im allgemeinen gegenueber den Verbindungen (B) gleicher Molekuellaenge relativ kleine Werte von $\Delta\varepsilon/\varepsilon_\perp$ und $k_{33}/k_{11}$, d. h. besitzen verhaeltnismaessig steile Kontrastkennlinien ; wegen ihrer schwachen bzw. fehlenden Polaritaet ergeben die Verbindungen (A) aber viel zu hohe Schwellenspannungen, weswegen fuer den Multiplexbetrieb von Anzeigen mit verdrillter nematischer Phase gemaess dem oben genannten Stand der Technik Mischungen aus jeweils mindestens einer nitrilfreien Verbindung (A) mit jeweils mindestens einer Nitrilverbindung (B) verwendet werden, wobei die Nitrilverbindung (en) (B) z. B. 2 bis 50 % des Gewichtes der Mischung aus (A) und (B) bilden.

Nun ist es aber aus verschiedenen Untersuchungen (siehe z. B. B. Engelen et al, Ann. Phys. *3*/1978, Seiten 403-407) bekannt, dass durch das Vermischen von polaren anisotropen Verbindungen, wie es die Nitrilverbindungen sind, mit unpolaren anisotropen Verbindungen, wie es die entsprechenden nitrilfreien Verbindungen sind, im Normalfall die Bildung von smektischen Phasen in einem erheblichen bzw. ueberwiegenden Teil des Anisotropiebereiches solcher FK-Mischungen induziert wird und es versteht sich, dass derartige Mischungen fuer den Betrieb der ueblichen FK-Anzeigen nicht geeignet sind.

Aufgabe der Erfindung ist es, eine FK-Mischung zum Betrieb von Drehzellen fuer Multiplexbetrieb anzugeben, die eine insgesamt positive DKA besitzt und im wesentlichen aus einer nitrilfreien Komponente und einer Nitrilkomponente besteht, wobei aber die Tendenz zur Bildung smektischer Phasen der Mischung praktisch ausgeschaltet bzw. in Richtung auf niedrige Temperaturen ausserhalb der normalen Betriebstemperatur von FK-Anzeigen verschoben wird.

Diese Aufgabe wird erfindungsgemaess geloest durch eine FK-Mischung mit den in Anspruch 1 angegebenen Merkmalen.

Die erfindungsgemaesse FK-Mischung besteht im wesentlichen, d. h. zu mindestens 90 Mol%, meist mindestens 95 Mol% und fuer viele Zwecke zu 100 Mol%, aus den beiden Komponenten (A) und (B).

Vorzugsweise besteht die Mischung aus insgesamt hoechstens sechs verschiedenen Verbindungen, z. B. aus insgesamt drei bis fuenf Verbindungen.

Da die erfindungsgemaess fuer die nitrilfreie Komponente (A) verwendeten Verbindungen der Formel

(1) im allgemeinen tiefere Schmelz- und Klaerpunkte haben als die fuer die Komponente (B) verwendeten vergleichbaren Nitrile der Formel (2), lassen sich mit erfindungsgemaessen FK-Mischungen ausreichend breite Mesophasenbereiche erzielen, typisch mindestens ueber den Bereich von Null bis 70 °C, und zwar unter Vermeidung von smektischen Phasen bzw. Verschiebung solcher Phasen zu Temperaturen von unter 0 °C.

Es wird angenommen, dass die mit erfindungsgemaessen FK-Mischungen erzielbare Vermeidung von smektischen Phasen im praktisch bedeutsamen Temperaturbereich durch das Merkmal (d) von Anspruch 1 bedingt ist. Gemaess diesem Merkmal der erfindungsgemaessen FK-Mischung muss (I) entweder die gesamte nitrilfreie Komponente (A) ausschliesslich aus solchen Verbindungen der Formel (1) bestehen, bei welchen die eine der beiden Flügelgruppen $R^1$, $R^2$ eine sehr kurze Kette hat, d. h. eine solche mit hoechstens insgesamt drei Kettenatomen ist. Je nachdem, ob die kurzkettige Flügelgruppe eine Alkyl-, N-Monoalkylamino-, Alkylcarbonyloxy- oder Alkoxygruppe ist, enthaelt der jeweilige Alkylteil hoechstens 3 C-Atome, wenn das kurzkettige $R^1$ oder $R^2$ eine n-Alkylgruppe ist, hoechstens 2 C-Atome, wenn das kurzkettige $R^1$ oder $R^2$ eine N-Mono-n-alkylaminogruppe oder eine n-Alkoxygruppe ist, weil dann das N- bzw. O-Atom als zusaetzliches Kettenatom wirkt, und nur 1 C-Atom, wenn das kurzkettige $R^1$ oder $R^2$ eine Alkylcarbonyloxygruppe oder Alkoxycarbonylgruppe ist, weil dann das Carbonyl-C-Atom und das Oxy-Sauerstoffatom als zusaetzliche Kettenatome wirken ; oder muss (II) die gesamte Nitrilkomponente (B) ausschliesslich aus solchen Verbindungen der Formel (2) bestehen, bei welchen die Flügelgruppe $R^3$ eine sehr kurze Kette hat, d. h. hoechstens drei Kettenatome enthaelt, die je nach der Bedeutung von $R^3$ wie oben fuer $R^1$, $R^2$ erlaeutert 3 C-Atome (n-Alkyl), 2 C-Atome plus ein N- oder O-Atom (N-Mono-n-alkylamino oder n-Alkoxy) oder 1 C-Atom plus 1 Carbonyl-C-Atom plus 1 Oxy-Sauerstoffatom (n-Alkylcarbonyloxy) sind.

Als Beispiele fuer kurzkettige Flügelgruppen $R^1$, $R^2$ bzw. $R^3$ sind zu nennen : Methyl, Ethyl, n-Propyl, Methoxy, Ethoxy, N-Monomethylamino, N-Monoethylamino, die Acetylgruppe und die Methoxycarbonylgruppe.

Fuer viele Verwendungszwecke erfindungsgemaesser FK-Mischungen wird bevorzugt, dass die nitrilfreie Komponente (A) — d. h. jede in der Mischung vorhandene Verbindung der Formel (1) aber keine Verbindung der Formel (2) — das eben erlaeuterte Kurzkettenkriterium fuer $R^1$ oder $R^2$ erfuellt, also n in einer der Gruppen $R^1$, $R^2 \leqslant 2$ ; dabei wird ausserdem bevorzugt, dass die andere Kette $R^2$, $R^1$ mindestens drei und vorzugsweise mindestens 5 Kettenatome enthält, also n fuer die andere Gruppe $R^2$, $R^1$ der Verbindungen (1) $\geqslant 2$ und vorzugsweise $\geqslant 4$ ist ; vorzugsweise besteht die Nitrilkomponente (B) bei dieser Ausfuehrungsform der erfindungsgemaessen Mischung ausschliesslich aus solchen Verbindungen der Formel (2), bei welchen die der Nitrilgruppe entgegengesetzte Flügelgruppe mindestens drei Kettenatome und vorzugsweise mindestens fuenf Kettenatome enthaelt, d. h. n in der Gruppe $R^3$ einen Wert von $\geqslant 2$, vorzugsweise $\geqslant 4$, hat.

Aber auch dann, wenn das Kurzkettenkriterium fuer die Nitrilkomponente (B) — d. h. jede in der Mischung vorhandene Verbindung der Formel (2) aber keine der Verbindungen der Formel (1) — erfuellt ist, lassen sich smektische Phasen ausschalten bzw. zu tieferen Temperaturen hin verschieben ; in diesem Fall besteht die Nitrilkomponente (B) also auschliesslich aus Verbindungen der Formel (2), bei welchen in der Gruppe $R^3$ der Wert von $r \leqslant 2$ ; in diesem Fall wird bevorzugt, dass die nitrilfreie Komponente (A) aus solchen Verbindungen der Formel (1) besteht, bei welchen in beiden Gruppen $R^1$, $R^2$ der Wert von $n \geqslant 2$ und vorzugsweise $\geqslant 4$ ist.

Zum oben genannten Stand der Technik betreffend FK-Mischungen fuer Multiplexbetrieb gehoeren einige spezielle Mischungen aus nitrilfreier Komponente und Nitrilkomponente, bei welchen einzelne Verbindungen der aus mehreren Verbindungen bestehenden nitrilfreien Komponente das Kurzkettenkriterium erfuellen ; aber weder gehoeren zum Stand der Technik nitrilfreie Komponenten, die ausschliesslich aus Verbindungen bestehen, die das Kurzkettenkriterium erfuellen, noch wird eine Loesung fuer das Problem der Vermeidung smektischer Phasen angegeben.

Sowohl fuer die dreikernigen Verbindungen (m = 1) der Formel (1) als auch fuer die dreikernigen Verbindungen (p = 1) der Formel (2) ist es wesentlich, dass jeweils hoechstens eine Bruecke zwischen benachbarten Ringen eine Carboxylgruppe ist, d. h. dass $Z^1$ und $Z^2$ in Formel (1) bzw. $Z^3$ und $Z^4$ in Formel (2) nicht gleichzeitig Carboxyl sein duerfen, weil dies unerwuenschte Viskositaetsbeitraege zu den Mischungen aus (1) und (2) bewirken wuerde.

Ferner gilt fuer die zweikernigen Verbindungen (p = Null) der Formel (2), dass $Z^3$ nicht die Carboxylgruppe ist, wenn $A^4$ den Cyclohexanring (Formel 1b) bedeutet, weil die Cyanophenylester von Cyclohexancarbonsaeuren eine vergleichsweise geringe thermische Stabilitaet haben und die bei ihrer Zersetzung entstehenden Produkte eine erhoehte Leitfaehigkeit, d. h. eine erhoehte Stromaufnahme, der Mischung verursachen.

Fuer erfindungsgemaesse FK-Mischungen geeignete Verbindungen der Formeln (1) und (2) sind als solche und meist auch zur Verwendung fuer FK-Anzeigen mit den entsprechenden physikalischen Daten bekannt bzw. kommerziell erhaeltlich. Entsprechende Synthesemethoden gehoeren zum Stand der Technik, siehe z. B. DE-A 23 44 732, 24 50 088, 24 29 093, 25 02 904, 26 36 684, 27 01 591 und 27 52 975 betreffend anisotrope Verbindungsstrukturen fuer (A) und (B) aus Ringen der Formeln (1a) und (1b), DE-A 26 41 724 betreffend anisotrope Pyrimid-Verbindungsstrukturen fuer (A) und (B) mit Ringen der Formel (1d), D. Demus et al in Mol. Cryst. and Ligu. Cryst. *56*/1979/115-121 betreffend anisotrope Tetrazin-Verbindungsstrukturen fuer (A) und (B) mit Ringen der Formel (1e), H. Sorkin in Mol. Cryst. and Liqu. Cryst. *56* (Letters) 279-281 betreffend anisotrope Dioxanverbindungsstrukturen fuer (A) und (B) mit Ringen der Formel (1f) sowie G.W. Gray et al in J. Chem. Soc. *11*/1980/465 betreffend anisotrope Bicyclooctan-Verbindungsstrukturen fuer (A) und (B) mit Ringen der Formel (1g). Anisotrope Pyrimidinverbindungen mit Ringen der Formel (1c) sind z. B. von A.I. Pavluchenk et al in J. Physique *40*/1979, Seite 63-1, beschrieben.

Wenn bestimmte, speziell gewuenschte Verbindungen der Formeln (1) und (2) nicht ohne weiteres als solche erhaeltlich sind, koennen sie nach an sich bekannten Methoden durch Modifikation aus entsprechenden erhaeltlichen Verbindungen hergestellt werden.

Erfindungsgemaesse FK-Mischungen koennen nach den in der FK-Technik bekannten Methoden aus den Komponenten z. B. durch Vermischen hergestellt und in bekannter Weise in uebliche Zellen eingefuellt werden.

Der weiteren Erlaeuterung der Erfindung dienen die folgenden Beispiele.

Beispiel 1

Aus einer Verbindung der Formel (10)

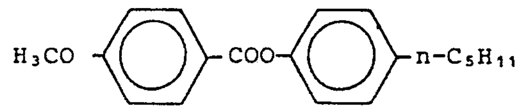

(10)

und einer Verbindung der Formel (20)

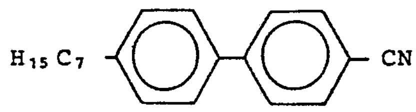

(20)

als jeweils einzige Verbindungen der Komponenten (A) und (B) werden Testzubereitungen mit unterschiedlichen Anteilen an (A) und (B) von Null bis 100 Mol% durch Vermischen hergestellt und jeweils in Testzellen eingefuellt, die Plattenabstaende von 40 μm bzw. 9,3 μm haben. In den Testzellen von 40 μm werden nach den ueblichen Messverfahren die jeweiligen Werte des Verhaeltnisses $\Delta\varepsilon/\varepsilon_{\perp}$ bzw. des Verhaeltnisses $k_{33}/k_{11}$ untersucht. Die Messtemperatur betraegt stets 0,95 des Kelvinwertes der Klaertemperatur.

Die Zusammensetzungen der Mischung in der Zelle und die Testergebnisse sind in der folgenden Tabelle I zusammengestellt.

Tabelle I

| Zubereitungs-Nr. | 1-1 | 1-2 | 1-3 | 1-4 | 1-5 | 1-6 |
|---|---|---|---|---|---|---|
| Verbindung (10) (Mol%) | 0 | 20 | 40 | 60 | 80 | 100 |
| Verbindung (20) (Mol%) | 100 | 80 | 60 | 40 | 20 | 0 |
| $\frac{\Delta\varepsilon}{\varepsilon_{\perp}}$ | 2,07 | 1,86 | 1,56 | 1,16 | 0,66 | 0 |
| $\frac{k_{33}}{k_{11}}$ | 1,16 | 1,02 | 0,98 | 1,03 | 1,17 | 1,41 |

Die Mischungen 1-2, 1-3, 1-4 und 1-5 zeigten bis hinunter zu Temperaturen von − 20 °C keine smektischen Phasen. Die Verhaeltniswerte fuer $\Delta\varepsilon/\varepsilon_{\perp}$ und $k_{33}/k_{11}$ veraendern sich mit den Mischungsanteilen der Komponenten (A) und (B) ausgesprochen nicht-linear und die im erfindungsgemaessen Bereich von 50 bis 95 Mol% (A) liegenden Mischungen 1-4 und 1-5 sind fuer Multiplexbetrieb gut geeignet, weil beide Verhaeltniswerte minimalisiert sind und die Mischungen daher steile Kennlinien bieten.

Dabei versteht sich, dass die Testzubereitungen 1-4 bzw. 1-5 z. B. bezueglich Arbeitsbereich (Breite

der Temperatur der Mesophase) noch nicht optimiert sind und in erster Linie den fuer erfindungsgemaesse FK-Mischungen charakteristischen Befund zeigen sollen, dass sich Mischungen aus polarer Nitrilkomponente (B) und nicht-polarer oder hoechstens schwach polarer nitrilfreier Komponente (A) bilden lassen, die sich fuer Multiplexbetrieb gut eignen und dennoch praktisch keine Tendenz zur Bildung von smektischen Phasen haben.

Beispiel 2

Nach der Arbeitsweise von Beispiel 1 wurden aus der Verbindung der Formel (12)

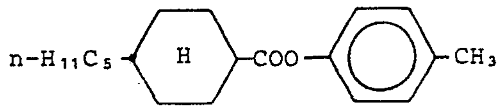
(trans)

(12)

und der Verbindung der Formel (22)

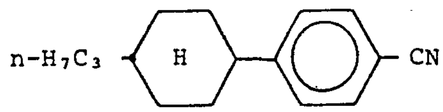
(trans)

(22)

als jeweils einzige Verbindungen der Komponenten (A) und (B) Testzubereitungen hergestellt und untersucht ; die Zusammensetzungen und Kennwerte sind in der folgenden Tabelle II zusammengestellt.

Tabelle II

| Zubereitungs-Nr. | 2-1 | 2-2 | 2-3 | 2-4 | 2-5 | 2-6 |
|---|---|---|---|---|---|---|
| Verbindung (12) (Mol%) | 0 | 20 | 40 | 60 | 80 | 100 |
| Verbindung (22) (Mol%) | 100 | 80 | 60 | 40 | 20 | 0 |
| $\frac{\Delta\varepsilon}{\varepsilon_\perp}$ | 1,92 | 1,52 | 1,19 | 0,90 | 0,50 | -0,09 |
| $\frac{k_{33}}{k_{11}}$ | 2.02 | 1,55 | 1,33 | 1,20 | 1,11 | 1,05 |

Die Mischungen 2-2, 2-3, 2-4 und 2-5 zeigten bis hinunter zu Temperaturen von − 20 °C keine smektischen Phasen.

Die Mischungen 2-4 und 2-5 liegen im erfindungsgemaessen Zusammensetzungsbereich und eignen sich fuer Multiplexbetrieb.

Im folgenden werden Beispiele fuer erfindungsgemaesse FK-Mischungen mit Angaben der Schmelzpunkte ($T_F$) bzw. der Klaerpunkte ($T_C$) angegeben.

Beispiele 3-113

Aus den in den folgenden Tabellen III und IV angegebenen Verbindungen wurden erfindungsgemaesse FK-Mischungen aus einer nitrilfreien Komponente (A) und einer Nitrilkomponente (B) hergestellt. Dabei besteht die Komponente (A) ausschliesslich aus solchen Verbindungen der Formel (1), bei welchen eine der Gruppen $R^1$, $R^2$ hoechstens drei Kettenatome enthaelt, das Kurzkettenkriterium also fuer die nitrilfreie Komponente (A) erfuellt ist.

Die Zusammensetzungen der FK-Mischungen, die Komponentenanteile in Mol% sowie die Schmelz- und Klaerpunkte $T_F$ und $T_C$ sind in Tabelle V angegeben. Bei keiner dieser Mischungen wurden innerhalb

der Temperaturspanne $T_F$ bis $T_C$ irgendwelche, den normalen Betrieb der Anzeigen stoerenden smektischen Phasen beobachtet. Alle Mischungen eignen sich fuer Multiplexbetrieb.

Tabelle III

Verbindungen der Formel (1)⁺

| Verb. Nr. | $R^1$ | $A^1$ | $Z^1$ | m | $A^2$ | $Z^2$ | $A^3$ | $R^2$ |
|---|---|---|---|---|---|---|---|---|
| 141 | $H_3C$ | (1a) | -COO- | 0 | | | (1a) | $n-C_5H_{11}$ |
| 144 | $n-H_7C_3$ | " | " | " | | | " | " |
| 156 | $H_3CO-$ | " | " | " | | | " | " |
| 158 | $H_5C_2O-$ | " | " | " | | | " | " |
| 162 | $n-H_7C_3$ | (1b) | " | " | | | " | " |
| 173 | " | " | " | " | | | " | $-O-n-C_4H_9$ |
| 179 | $n-H_{11}C_5$ | " | " | " | | | " | $-O-CH_3$ |
| 193 | $n-H_7C_3$ | " | – | 1 | (1a) | -COO- | " | $-n-C_3H_7$ |
| 332 | " | " | – | 0 | | | " | $-O-n-C_4H_9$ |

Tabelle IV

Verbindungen der Formel (2)⁺

| | $R^3$ | $A^4$ | $Z^3$ | p | $A^5$ | $Z^4$ | $A^6$ |
|---|---|---|---|---|---|---|---|
| 205 | $n-H_{11}C_5$ | (1a) | – | 0 | | | (1a) |
| 207 | $n-H_{15}C_7$ | " | – | " | | | " |
| 218 | $n-H_{11}C_5$ | " | – | 1 | (1a) | – | " |
| 224 | $n-H_{11}C_5-N(H)-$ | " | – | 0 | | | " |
| 226 | $n-H_{13}C_7-N(H)-$ | " | – | " | | | " |
| 304 | $n-H_{11}C_5$ | (1b) | – | " | | | " |
| 305 | $n-H_{15}C_7$ | " | – | " | | | " |
| 310 | $n-H_{11}C_5$ | " | – | 1 | " | – | " |
| 401 | " | (1c) | – | 0 | | | " |
| 402 | $n-H_{15}C_7$ | " | – | " | | | " |
| 403 | $n-H_9C_4$ | (1a) | – | 1 | (1c) | – | " |

+ Bemerkung
Die Kovalenzbindung ist durch einen einfachen Strich « – » angedeutet.

Tabelle V

| Beispiel Nr. | Mischung aus Verbindung der Formel | Mol% | $T_F$ (°C) | $T_C$ (°C) |
|---|---|---|---|---|
| 3 | | | 0,6 | 76,7 |
| | 144 | 71,05 | | |
| | 403 | 15,70 | | |
| | 193 | 13,25 | | |

Tabelle V (Fortsetzung)

| Beispiel Nr. | Mischung aus Verbindung der Formel | Mol% | $T_F$ (°C) | $T_C$ (°C) |
|---|---|---|---|---|
| 4 | | | 1,7 | 77,5 |
| | 144 | 72,99 | | |
| | 403 | 16,17 | | |
| | 310 | 10,84 | | |
| 5 | | | 2,3 | 77,2 |
| | 144 | 74,01 | | |
| | 403 | 16,42 | | |
| | 218 | 9,57 | | |
| 6 | | | 2,7 | 65,2 |
| | 144 | 74,72 | | |
| | 193 | 14,11 | | |
| | 310 | 11,18 | | |
| 7 | | | 4,5 | 65,2 |
| | 144 | 78,02 | | |
| | 310 | 11,83 | | |
| | 218 | 10,15 | | |
| 8 | | | -12,6 | 68,7 |
| | 144 | 50,79 | | |
| | 304 | 29,61 | | |
| | 403 | 10,87 | | |
| | 193 | 8,73 | | |
| 9 | | | -11,9 | 68,7 |
| | 144 | 51,73 | | |
| | 304 | 30,30 | | |
| | 403 | 11,09 | | |
| | 310 | 6,88 | | |
| 10 | | | -11,7 | 69,1 |
| | 144 | 51,96 | | |
| | 304 | 30,46 | | |
| | 403 | 11,14 | | |
| | 218 | 6,44 | | |
| 11 | | | -8,9 | 68,0 |
| | 144 | 55,89 | | |
| | 207 | 22,20 | | |
| | 403 | 12,07 | | |
| | 193 | 9,84 | | |
| 12 | | | -8,2 | 68,0 |
| | 144 | 56,95 | | |
| | 207 | 22,93 | | |
| | 403 | 12,32 | | |
| | 310 | 7,81 | | |
| 13 | | | -8,0 | 68,2 |
| | 144 | 57,27 | | |
| | 207 | 23,15 | | |
| | 403 | 12,39 | | |
| | 218 | 7,18 | | |

Tabelle V (Fortsetzung)

| Beispiel Nr. | Mischung aus Verbindung der Formel | Mol% | $T_F$ (°C) | $T_C$ (°C) |
|---|---|---|---|---|
| 14 | | | -8,8 | 71,1 |
| | 144 | 56,03 | | |
| | 305 | 22,00 | | |
| | 403 | 12,10 | | |
| | 193 | 9,87 | | |
| 15 | | | -8,1 | 71,3 |
| | 144 | 57,09 | | |
| | 305 | 22,72 | | |
| | 403 | 12,35 | | |
| | 310 | 7,84 | | |
| 16 | | | -7,9 | 71,5 |
| | 144 | 57,43 | | |
| | 305 | 22,94 | | |
| | 403 | 12,43 | | |
| | 218 | 7,20 | | |
| 17 | | | -8,1 | 67,7 |
| | 144 | 57,13 | | |
| | 162 | 20,40 | | |
| | 403 | 12,36 | | |
| | 193 | 10,11 | | |
| 18 | | | -7,4 | 67,7 |
| | 144 | 58,23 | | |
| | 162 | 21,10 | | |
| | 403 | 12,62 | | |
| | 310 | 8,05 | | |
| 19 | | | -7,1 | 67,9 |
| | 144 | 58,60 | | |
| | 162 | 21,33 | | |
| | 403 | 12,71 | | |
| | 218 | 7,37 | | |
| 20 | | | -8,1 | 68,8 |
| | 144 | 57,18 | | |
| | 156 | 20,32 | | |
| | 403 | 12,37 | | |
| | 193 | 10,12 | | |
| 21 | | | -7,3 | 68,9 |
| | 144 | 58,29 | | |
| | 156 | 21,02 | | |
| | 403 | 12,64 | | |
| | 310 | 8,06 | | |
| 22 | | | -7,1 | 69,1 |
| | 144 | 58,65 | | |
| | 156 | 21,25 | | |
| | 403 | 12,72 | | |
| | 218 | 7,38 | | |

Tabelle V (Fortsetzung)

| Beispiel Nr. | Mischung aus Verbindung der Formel | Mol% | $T_F$ (°C) | $T_C$ (°C) |
|---|---|---|---|---|
| 23 | | | -8,6 | 72,7 |
| | 144 | 56,32 | | |
| | 179 | 21,58 | | |
| | 403 | 12,17 | | |
| | 193 | 9,93 | | |
| 24 | | | -7,9 | 73,0 |
| | 144 | 57,43 | | |
| | 179 | 22,24 | | |
| | 403 | 12,43 | | |
| | 310 | 7,90 | | |
| 25 | | | -7,7 | 73,2 |
| | 144 | 57,78 | | |
| | 179 | 22,45 | | |
| | 403 | 12,51 | | |
| | 218 | 7,25 | | |
| 26 | | | -8,9 | 74,5 |
| | 144 | 55,91 | | |
| | 173 | 22,18 | | |
| | 403 | 12,07 | | |
| | 193 | 9,84 | | |
| 27 | | | -8,2 | 74,8 |
| | 144 | 57,05 | | |
| | 173 | 22,79 | | |
| | 403 | 12,34 | | |
| | 310 | 7,83 | | |
| 28 | | | -7,9 | 75,1 |
| | 144 | 57,40 | | |
| | 173 | 22,98 | | |
| | 403 | 12,42 | | |
| | 218 | 7,20 | | |
| 29 | | | -7,1 | 65,1 |
| | 144 | 58,58 | | |
| | 173 | 23,62 | | |
| | 193 | 10,43 | | |
| | 218 | 7,37 | | |
| 30 | | | -6,3 | 65,3 |
| | 144 | 59,82 | | |
| | 173 | 24,30 | | |
| | 310 | 8,34 | | |
| | 218 | 7,54 | | |
| 31 | | | -5,8 | 69,2 |
| | 144 | 60,63 | | |
| | 332 | 15,30 | | |
| | 403 | 13,19 | | |
| | 193 | 10,88 | | |

Tabelle V (Fortsetzung)

| Beispiel Nr. | Mischung aus Verbindung der Formel | Mol% | $T_F$ (°C) | $T_C$ (°C) |
|---|---|---|---|---|
| 32 | | | -5,0 | 69,4 |
| | 144 | 61,86 | | |
| | 332 | 15,94 | | |
| | 403 | 13,49 | | |
| | 310 | 8,71 | | |
| 33 | | | -4,7 | 69,4 |
| | 144 | 62,32 | | |
| | 332 | 16,19 | | |
| | 403 | 13,60 | | |
| | 218 | 7,89 | | |
| 34 | | | -5,2 | 72,8 |
| | 144 | 61,47 | | |
| | 402 | 14,07 | | |
| | 403 | 13,39 | | |
| | 193 | 11,07 | | |
| 35 | | | -4,4 | 72,6 |
| | 144 | 62,78 | | |
| | 402 | 14,63 | | |
| | 403 | 13,71 | | |
| | 310 | 8,88 | | |
| 36 | | | -4,1 | 72,7 |
| | 144 | 63,29 | | |
| | 402 | 14,85 | | |
| | 403 | 13,83 | | |
| | 218 | 8,03 | | |
| 37 | | | -3,2 | 89,7 |
| | 144 | 64,76 | | |
| | 403 | 14,18 | | |
| | 193 | 11,81 | | |
| | 310 | 9,25 | | |
| 38 | | | -2,5 | 74,5 |
| | 144 | 65,93 | | |
| | 403 | 14,18 | | |
| | 193 | 12,08 | | |
| | 401 | 7,53 | | |
| 39 | | | -2,8 | 89,8 |
| | 144 | 65,39 | | |
| | 403 | 14,33 | | |
| | 193 | 11,95 | | |
| | 218 | 8,33 | | |
| 40 | | | -1,2 | 77,0 |
| | 144 | 68,01 | | |
| | 403 | 14,96 | | |
| | 193 | 12,55 | | |
| | 226 | 4,48 | | |

Tabelle V (Fortsetzung)

| Beispiel Nr. | Mischung aus Verbindung der Formel | Mol% | $T_F$ (°C) | $T_C$ (°C) |
|---|---|---|---|---|
| 41 | | | -1,1 | 77,0 |
| | 144 | 68,12 | | |
| | 403 | 14,99 | | |
| | 193 | 12,58 | | |
| | 224 | 4,32 | | |
| 42 | | | -1,0 | 76,1 |
| | 144 | 68,35 | | |
| | 403 | 15,04 | | |
| | 193 | 12,63 | | |
| | 158 | 3,98 | | |
| 43 | | | -1,5 | 75,0 |
| | 144 | 67,52 | | |
| | 403 | 14,84 | | |
| | 310 | 9,78 | | |
| | 401 | 7,86 | | |
| 44 | | | -1,8 | 90,8 |
| | 144 | 67,03 | | |
| | 403 | 14,72 | | |
| | 310 | 9,68 | | |
| | 218 | 8,57 | | |
| 45 | | | -0,2 | 77,7 |
| | 144 | 69,73 | | |
| | 403 | 15,38 | | |
| | 310 | 10,20 | | |
| | 226 | 4,69 | | |
| 46 | | | -0,1 | 77,8 |
| | 144 | 69,84 | | |
| | 403 | 15,40 | | |
| | 310 | 10,22 | | |
| | 224 | 4,53 | | |
| 47 | | | 0 | 76,8 |
| | 144 | 70,07 | | |
| | 403 | 15,46 | | |
| | 310 | 10,27 | | |
| | 158 | 4,20 | | |
| 48 | | | -1,1 | 74,9 |
| | 144 | 68,23 | | |
| | 403 | 15,02 | | |
| | 401 | 8,01 | | |
| | 218 | 8,74 | | |
| 49 | | | 0,3 | 77,5 |
| | 144 | 70,56 | | |
| | 403 | 15,58 | | |
| | 218 | 9,07 | | |
| | 226 | 4,79 | | |
| 50 | | | 0,4 | 77,6 |
| | 144 | 70,67 | | |
| | 403 | 15,60 | | |
| | 218 | 9,09 | | |
| | 224 | 4,64 | | |

Tabelle V (Fortsetzung)

| Beispiel Nr. | Mischung aus Verbindung der Formel | Mol% | $T_F$ (°C) | $T_C$ (°C) |
|---|---|---|---|---|
| 51 | | | 0,5 | 76,6 |
| | 144 | 70,90 | | |
| | 403 | 15,66 | | |
| | 218 | 9,12 | | |
| | 158 | 4,32 | | |
| 52 | | | -0,9 | 79,8 |
| | 144 | 68,56 | | |
| | 193 | 12,68 | | |
| | 310 | 9,98 | | |
| | 218 | 8,79 | | |
| 53 | | | 0,7 | 65,9 |
| | 144 | 71,30 | | |
| | 193 | 13,31 | | |
| | 310 | 10,51 | | |
| | 226 | 4,88 | | |
| 54 | | | 0,8 | 66,0 |
| | 144 | 71,41 | | |
| | 193 | 13,33 | | |
| | 310 | 10,53 | | |
| | 224 | 4,73 | | |
| 55 | | | 1,2 | 65,5 |
| | 144 | 72,19 | | |
| | 193 | 13,51 | | |
| | 218 | 9,31 | | |
| | 226 | 4,99 | | |
| 56 | | | 1,3 | 65,6 |
| | 144 | 72,29 | | |
| | 193 | 13,54 | | |
| | 218 | 9,32 | | |
| | 224 | 4,85 | | |
| 57 | | | 2,3 | 66,1 |
| | 144 | 74,12 | | |
| | 310 | 11,06 | | |
| | 218 | 9,59 | | |
| | 226 | 5,24 | | |
| 58 | | | 2,4 | 66,1 |
| | 144 | 74,22 | | |
| | 310 | 11,08 | | |
| | 218 | 9,60 | | |
| | 224 | 5,11 | | |
| 59 | | | -18,6 | 68,1 |
| | 144 | 43,06 | | |
| | 205 | 35,36 | | |
| | 403 | 9,07 | | |
| | 193 | 7,11 | | |
| | 310 | 5,40 | | |

Tabelle V (Fortsetzung)

| Beispiel Nr. | Mischung aus Verbindung der Formel | Mol% | $T_F$ (°C) | $T_C$ (°C) |
|---|---|---|---|---|
| 60 | | | -18,5 | 68,7 |
| | 144 | 43,13 | | |
| | 205 | 35,43 | | |
| | 403 | 9,08 | | |
| | 193 | 7,13 | | |
| | 218 | 5,23 | | |
| 61 | | | -17,8 | 66,5 |
| | 144 | 44,05 | | |
| | 304 | 24,77 | | |
| | 305 | 14,56 | | |
| | 403 | 9,30 | | |
| | 193 | 7,32 | | |
| 62 | | | -16,6 | 65,4 |
| | 144 | 45,47 | | |
| | 304 | 25,78 | | |
| | 156 | 13,58 | | |
| | 403 | 9,62 | | |
| | 218 | 5,54 | | |
| 63 | | | -17,8 | 67,5 |
| | 144 | 43,97 | | |
| | 304 | 24,71 | | |
| | 179 | 14,74 | | |
| | 403 | 9,28 | | |
| | 193 | 7,30 | | |
| 64 | | | -17,3 | 67,4 |
| | 144 | 44,64 | | |
| | 304 | 25,18 | | |
| | 179 | 15,08 | | |
| | 403 | 9,43 | | |
| | 310 | 5,67 | | |
| 65 | | | -17,2 | 68,0 |
| | 144 | 44,73 | | |
| | 304 | 25,25 | | |
| | 179 | 15,13 | | |
| | 403 | 9,45 | | |
| | 218 | 5,44 | | |
| 66 | | | -18,2 | 68,8 |
| | 144 | 43,48 | | |
| | 304 | 24,37 | | |
| | 173 | 15,79 | | |
| | 403 | 9,16 | | |
| | 193 | 7,20 | | |
| 67 | | | -17,7 | 68,7 |
| | 144 | 44,15 | | |
| | 304 | 24,84 | | |
| | 173 | 16,11 | | |
| | 403 | 9,32 | | |
| | 310 | 5,58 | | |

Tabelle V (Fortsetzung)

| Beispiel Nr. | Mischung aus Verbindung der Formel | Mol% | $T_F$ (°C) | $T_C$ (°C) |
|---|---|---|---|---|
| 68 | | | -17,6 | 69,3 |
| | 144 | 44,23 | | |
| | 304 | 24,90 | | |
| | 173 | 16,16 | | |
| | 403 | 9,34 | | |
| | 218 | 5,38 | | |
| 69 | | | -15,7 | 65,2 |
| | 144 | 46,66 | | |
| | 304 | 26,62 | | |
| | 332 | 8,95 | | |
| | 403 | 9,90 | | |
| | 193 | 7,86 | | |
| 70 | | | -15,1 | 65,1 |
| | 144 | 47,40 | | |
| | 304 | 27,15 | | |
| | 332 | 9,24 | | |
| | 403 | 10,07 | | |
| | 310 | 6,13 | | |
| 71 | | | -15,0 | 65,6 |
| | 144 | 47,53 | | |
| | 304 | 27,24 | | |
| | 332 | 9,30 | | |
| | 403 | 10,10 | | |
| | 218 | 5,83 | | |
| 72 | | | -15,5 | 66,9 |
| | 144 | 46,85 | | |
| | 304 | 26,76 | | |
| | 402 | 8,55 | | |
| | 403 | 9,94 | | |
| | 193 | 7,90 | | |
| 73 | | | -14,7 | 78,1 |
| | 144 | 47,93 | | |
| | 304 | 27,53 | | |
| | 403 | 10,19 | | |
| | 193 | 8,13 | | |
| | 310 | 6,22 | | |
| 74 | | | -14,1 | 67,9 |
| | 144 | 48,78 | | |
| | 304 | 28,14 | | |
| | 403 | 10,39 | | |
| | 193 | 8,31 | | |
| | 401 | 4,38 | | |
| 75 | | | -14,6 | 78,6 |
| | 144 | 48,07 | | |
| | 304 | 27,64 | | |
| | 403 | 10,23 | | |
| | 193 | 8,16 | | |
| | 218 | 5,90 | | |

Tabelle V (Fortsetzung)

| Beispiel Nr. | Mischung aus Verbindung der Formel | Mol% | $T_F$ (°C) | $T_C$ (°C) |
|---|---|---|---|---|
| 76 | | | -13,4 | 69,1 |
| | 144 | 49,63 | | |
| | 304 | 28,76 | | |
| | 403 | 10,59 | | |
| | 193 | 8,49 | | |
| | 226 | 2.53 | | |
| 77 | | | -13,8 | 69,1 |
| | 144 | 49,72 | | |
| | 304 | 28,83 | | |
| | 403 | 10,61 | | |
| | 193 | 8,51 | | |
| | 224 | 2,33 | | |
| 78 | | | -13,2 | 68,6 |
| | 144 | 49,89 | | |
| | 304 | 28,95 | | |
| | 403 | 10,65 | | |
| | 193 | 8,54 | | |
| | 158 | 1,96 | | |
| 79 | | | -12,8 | 69,2 |
| | 144 | 50,51 | | |
| | 304 | 29,40 | | |
| | 403 | 10,80 | | |
| | 310 | 6,67 | | |
| | 226 | 2,61 | | |
| 80 | | | -12,7 | 69,2 |
| | 144 | 50,61 | | |
| | 304 | 29,47 | | |
| | 403 | 10,82 | | |
| | 310 | 6,69 | | |
| | 224 | 2,41 | | |
| 81 | | | -12,6 | 68,7 |
| | 144 | 50,78 | | |
| | 304 | 29,60 | | |
| | 403 | 10,86 | | |
| | 310 | 6,72 | | |
| | 158 | 2,04 | | |
| 82 | | | -12,6 | 69,6 |
| | 144 | 50,71 | | |
| | 304 | 29,55 | | |
| | 403 | 10,85 | | |
| | 218 | 6,27 | | |
| | 226 | 2,63 | | |
| 83 | | | -12,5 | 69,6 |
| | 144 | 50,81 | | |
| | 304 | 29,62 | | |
| | 403 | 10,87 | | |
| | 218 | 6,28 | | |
| | 224 | 2,43 | | |

Tabelle V (Fortsetzung)

| Beispiel Nr. | Mischung aus Verbindung der Formel | Mol% | $T_F$ (°C) | $T_C$ (°C) |
|---|---|---|---|---|
| 84 | | | -12,4 | 69,1 |
| | 144 | 50,98 | | |
| | 304 | 29,75 | | |
| | 403 | 10,91 | | |
| | 218 | 6,30 | | |
| | 158 | 2,06 | | |
| 85 | | | -13,3 | 70,3 |
| | 144 | 49,85 | | |
| | 304 | 28,92 | | |
| | 193 | 8,53 | | |
| | 310 | 6,55 | | |
| | 218 | 6,15 | | |
| 86 | | | -14,7 | 65,9 |
| | 144 | 47,88 | | |
| | 207 | 17,03 | | |
| | 305 | 16,80 | | |
| | 403 | 10,18 | | |
| | 193 | 8,12 | | |
| 87 | | | -14,7 | 67,1 |
| | 144 | 47,87 | | |
| | 207 | 17,03 | | |
| | 179 | 16,80 | | |
| | 403 | 10,18 | | |
| | 193 | 8,12 | | |
| 88 | | | -14,2 | 67,0 |
| | 144 | 48,62 | | |
| | 207 | 17,48 | | |
| | 179 | 17,20 | | |
| | 403 | 10,36 | | |
| | 310 | 8,34 | | |
| 89 | | | -14,1 | 67,5 |
| | 144 | 48,76 | | |
| | 207 | 17,57 | | |
| | 179 | 17,28 | | |
| | 403 | 10,39 | | |
| | 218 | 6,00 | | |
| 90 | | | -15,1 | 68,5 |
| | 144 | 47,41 | | |
| | 207 | 16,75 | | |
| | 173 | 17,75 | | |
| | 403 | 10,08 | | |
| | 193 | 8,02 | | |
| 91 | | | -14,5 | 68,5 |
| | 144 | 48,16 | | |
| | 207 | 17,20 | | |
| | 173 | 18,13 | | |
| | 403 | 10,25 | | |
| | 310 | 6,26 | | |

Tabelle V (Fortsetzung)

| Beispiel Nr. | Mischung aus Verbindung der Formel | Mol% | $T_F$ (°C) | $T_C$ (°C) |
|---|---|---|---|---|
| 92 | | | -14,4 | 69,0 |
| | 144 | 48,30 | | |
| | 207 | 17,29 | | |
| | 173 | 18,20 | | |
| | 403 | 10,28 | | |
| | 218 | 5,93 | | |
| 93 | | | -12,3 | 66,2 |
| | 144 | 51,14 | | |
| | 207 | 19,07 | | |
| | 402 | 10,04 | | |
| | 403 | 10,95 | | |
| | 193 | 8,81 | | |
| 94 | | | -11,7 | 66,1 |
| | 144 | 51,98 | | |
| | 207 | 19,61 | | |
| | 402 | 10,34 | | |
| | 403 | 11,14 | | |
| | 310 | 6,93 | | |
| 95 | | | -11,5 | 66,5 |
| | 144 | 52,18 | | |
| | 207 | 19,74 | | |
| | 402 | 10,42 | | |
| | 403 | 11,19 | | |
| | 218 | 6,47 | | |
| 96 | | | -11,3 | 78,8 |
| | 144 | 52,58 | | |
| | 207 | 19,99 | | |
| | 403 | 11,28 | | |
| | 193 | 9,12 | | |
| | 310 | 7,03 | | |
| 97 | | | -10,6 | 67,1 |
| | 144 | 53,46 | | |
| | 207 | 20,57 | | |
| | 403 | 11,49 | | |
| | 193 | 9,31 | | |
| | 401 | 5,16 | | |
| 98 | | | -11,1 | 79,2 |
| | 144 | 52,80 | | |
| | 207 | 20,14 | | |
| | 403 | 11,34 | | |
| | 193 | 9,17 | | |
| | 218 | 6,56 | | |
| 99 | | | -9,9 | 68,6 |
| | 144 | 54,49 | | |
| | 207 | 21,25 | | |
| | 403 | 11,73 | | |
| | 193 | 9,53 | | |
| | 226 | 3,00 | | |

Tabelle V (Fortsetzung)

| Beispiel Nr. | Mischung aus Verbindung der Formel | Mol% | $T_F$ (°C) | $T_C$ (°C) |
|---|---|---|---|---|
| 100 | | | -9,8 | 68,6 |
| | 144 | 54,58 | | |
| | 207 | 21,32 | | |
| | 403 | 11,76 | | |
| | 193 | 9,55 | | |
| | 224 | 2,79 | | |
| 101 | | | -9,7 | 67,9 |
| | 144 | 54,76 | | |
| | 207 | 21,44 | | |
| | 403 | 11,80 | | |
| | 193 | 9,59 | | |
| | 158 | 2,42 | | |
| 102 | | | -10,0 | 67,1 |
| | 144 | 54,40 | | |
| | 207 | 21,20 | | |
| | 403 | 11,71 | | |
| | 310 | 7,35 | | |
| | 401 | 5,33 | | |
| 103 | | | -10,4 | 79,4 |
| | 144 | 53,75 | | |
| | 207 | 20,76 | | |
| | 403 | 11,56 | | |
| | 310 | 7,24 | | |
| | 218 | 6,69 | | |
| 104 | | | -9,2 | 68,6 |
| | 144 | 55,47 | | |
| | 207 | 21,92 | | |
| | 403 | 11,97 | | |
| | 310 | 7,55 | | |
| | 226 | 3,10 | | |
| 105 | | | -9,2 | 68,7 |
| | 144 | 55,57 | | |
| | 207 | 21,98 | | |
| | 403 | 11,99 | | |
| | 310 | 7,56 | | |
| | 224 | 2,89 | | |
| 106 | | | -9,0 | 68,0 |
| | 144 | 55,75 | | |
| | 207 | 22,11 | | |
| | 403 | 12,03 | | |
| | 310 | 7,60 | | |
| | 158 | 2,52 | | |
| 107 | | | -9,8 | 67,4 |
| | 144 | 54,66 | | |
| | 207 | 21,37 | | |
| | 403 | 11,78 | | |
| | 401 | 5,37 | | |
| | 218 | 6,82 | | |

Tabelle V (Fortsetzung)

| Beispiel Nr. | Mischung aus Verbindung der Formel | Mol% | $T_F$ (°C) | $T_C$ (°C) |
|---|---|---|---|---|
| 108 | | | -9,0 | 68,9 |
| | 144 | 55,76 | | |
| | 207 | 22,11 | | |
| | 403 | 12,03 | | |
| | 218 | 6,97 | | |
| | 226 | 3,13 | | |
| 1D9 | | | -9,0 | 68,9 |
| | 144 | 55,86 | | |
| | 207 | 22,18 | | |
| | 403 | 12,06 | | |
| | 218 | 6,98 | | |
| | 224 | 2,92 | | |
| 110 | | | -8,8 | 68,3 |
| | 144 | 56,04 | | |
| | 207 | 22,30 | | |
| | 403 | 12,10 | | |
| | 218 | 7,01 | | |
| | 158 | 2,55 | | |
| 111 | | | -9,7 | 70,1 |
| | 144 | 54,74 | | |
| | 207 | 21,43 | | |
| | 193 | 9,59 | | |
| | 310 | 7,42 | | |
| | 218 | 6,83 | | |
| 112 | | | -19,0 | 67,3 |
| | 144 | 42,50 | | |
| | 205 | 34,88 | | |
| | 403 | 8,94 | | |
| | 193 | 7,00 | | |
| | 310 | 5,31 | | |
| | 158 | 1,37 | | |
| 113 | | | -19,0 | 67,9 |
| | 144 | 42,57 | | |
| | 205 | 34,94 | | |
| | 403 | 8,95 | | |
| | 193 | 7,01 | | |
| | 218 | 5,15 | | |
| | 158 | 1,37 | | |

Beispiele 114-208

Die folgenden Beispiele erlaeutern erfindungsgemaesse FK-Mischungen aus nitrilfreier Komponente (A) und Nitrilkomponente (B), bei welchen das Kurzkettenkriterium fuer alle Verbindungen (2) der Komponente (B) erfuellt ist. Eine Tendenz zur Bildung smektischer Phasen war nicht zu beobachten ; alle Mischungen waren fuer Multiplexbetrieb geeignet.

Die Verbindungen sind in Tabelle VI, die Mischungszusammensetzungen (in Mol%) und die Schmelz-($T_F$) bzw. Klaer-($T_C$)-punkte sind in Tabelle VII zusammengestellt.

(Siehe Tabelle VI Seite 20 f.)

## Tabelle VI

Verbindungen der Formel (1)⁺

| Verb. Nr. | $R^1$ | $A^1$ | $Z^1$ | m | $A^2$ | $Z^2$ | $A^3$ | $R^2$ |
|---|---|---|---|---|---|---|---|---|
| 148 | $n-H_{11}C_5$ | (1a) | -COO- | 0 | | | (1a) | $n-C_5H_{11}$ |
| 149 | " | " | " | " | | | " | $n-C_7H_{15}$ |
| 152 | $n-H_{15}C_7$ | " | " | " | | | " | $n-C_5H_{11}$ |
| 153 | " | " | " | " | | | " | $n-C_7H_{15}$ |
| 166 | $n-H_{11}C_5$ | (1b) | " | " | | | " | $n-C_5H_{11}$ |
| 177 | $n-H_9C_4$ | " | " | " | | | " | $-O-n-C_4H_9$ |
| 193 | $n-H_7C_3$ | " | - | 1 | (1a) | -COO- | " | $n-C_3H_7$ |
| 195 | $H_5C_2$ | " | - | " | " | " | (1b) | " |
| 196 | $n-H_9C_4$ | " | - | " | " | " | " | " |
| 321 | $n-H_{11}C_5$ | " | - | 0 | | | " | $n-C_5H_{11}$ |

Verbindungen der Formel (2)⁺

| | $R^3$ | $A^4$ | $Z^3$ | p | $A^5$ | $Z^4$ | $A^6$ |
|---|---|---|---|---|---|---|---|
| 201 | $H_3C$ | (1a) | - | 0 | | | (1a) |
| 202 | $H_5C_2$ | " | - | " | | | " |
| 203 | $n-H_7C_3$ | " | - | " | | | " |
| 301 | $H_5C_2$ | (1b) | - | " | | | " |
| 302 | $n-H_7C_3$ | " | - | " | | | " |

+ Bemerkung
Die Kovalenzbindung ist durch einen einfachen Strich « – » angedeutet.

## Tabelle VII

| Beispiel Nr. | Mischung aus Verbindung der Formel | Mol% | $T_F$ (°C) | $T_C$ (°C) |
|---|---|---|---|---|
| 114 | | | 4,4 | 80,3 |
| | 177 | 41,46 | | |
| | 302 | 35,50 | | |
| | 196 | 23,05 | | |
| 115 | | | 4,9 | 75,9 |
| | 177 | 42,01 | | |
| | 302 | 36,01 | | |
| | 195 | 21,98 | | |
| 116 | | | 7,4 | 79,6 |
| | 177 | 44,98 | | |
| | 302 | 38,82 | | |
| | 193 | 16,19 | | |

Tabelle VII (Fortsetzung)

| Beispiel Nr. | Mischung aus Verbindung der Formel | Mol% | $T_F$ (°C) | $T_C$ (°C) |
|---|---|---|---|---|
| 117 | | | 9,2 | 78,7 |
| | 177 | 47,30 | | |
| | 202 | 26,43 | | |
| | 196 | 26,27 | | |
| 118 | | | 8,3 | 73,8 |
| | 302 | 39,95 | | |
| | 166 | 34,40 | | |
| | 196 | 25,65 | | |
| 119 | | | 9,0 | 68,3 |
| | 302 | 40,68 | | |
| | 166 | 35,30 | | |
| | 195 | 24,02 | | |
| 120 | | | -11,5 | 66,1 |
| | 149 | 49,48 | | |
| | 302 | 21,16 | | |
| | 196 | 14,45 | | |
| | 195 | 14,92 | | |
| 121 | | | -9,4 | 66,9 |
| | 149 | 52,20 | | |
| | 302 | 22,71 | | |
| | 196 | 15,40 | | |
| | 193 | 9,69 | | |
| 122 | | | -7,5 | 66,7 |
| | 149 | 54,84 | | |
| | 196 | 16,33 | | |
| | 195 | 16,47 | | |
| | 203 | 12,36 | | |
| 123 | | | -4,9 | 70,6 |
| | 149 | 58,53 | | |
| | 196 | 17,65 | | |
| | 195 | 17,53 | | |
| | 201 | 6,30 | | |
| 124 | | | -5,2 | 68,0 |
| | 149 | 58,04 | | |
| | 196 | 17,47 | | |
| | 203 | 13,41 | | |
| | 193 | 11,08 | | |
| 125 | | | -2,5 | 72,6 |
| | 149 | 62,13 | | |
| | 196 | 18,95 | | |
| | 193 | 12,07 | | |
| | 201 | 6,84 | | |
| 126 | | | -5,2 | 65,2 |
| | 149 | 58,08 | | |
| | 195 | 17,40 | | |
| | 203 | 13,43 | | |
| | 193 | 11,09 | | |

Tabelle VII (Fortsetzung)

| Beispiel Nr. | Mischung aus Verbindung der Formel | Mol% | $T_F$ (°C) | $T_C$ (°C) |
|---|---|---|---|---|
| 127 | | | -2,3 | 69,4 |
| | 149 | 62,36 | | |
| | 195 | 18,63 | | |
| | 193 | 12,13 | | |
| | 201 | 6,88 | | |
| 128 | | | -2,3 | 68,6 |
| | 152 | 38,67 | | |
| | 178 | 35,44 | | |
| | 196 | 19,02 | | |
| | 201 | 6,87 | | |
| 129 | | | -2,2 | 65,4 |
| | 152 | 38,84 | | |
| | 178 | 35,60 | | |
| | 195 | 18,67 | | |
| | 201 | 6,90 | | |
| 130 | | | -0,5 | 66,8 |
| | 152 | 41,67 | | |
| | 178 | 38,21 | | |
| | 193 | 12,81 | | |
| | 201 | 7,31 | | |
| 131 | | | -7,8 | 65,0 |
| | 152 | 30,78 | | |
| | 177 | 29,03 | | |
| | 302 | 24,00 | | |
| | 196 | 16,19 | | |
| 132 | | | -2,0 | 68,6 |
| | 152 | 39,29 | | |
| | 177 | 34,53 | | |
| | 196 | 19,23 | | |
| | 201 | 6,96 | | |
| 133 | | | -1,8 | 65,2 |
| | 152 | 39,50 | | |
| | 177 | 34,66 | | |
| | 195 | 18,84 | | |
| | 201 | 6,99 | | |
| 134 | | | 0,1 | 66,6 |
| | 152 | 42,78 | | |
| | 177 | 36,68 | | |
| | 193 | 13,07 | | |
| | 201 | 7,47 | | |
| 135 | | | -3,8 | 75,5 |
| | 152 | 36,41 | | |
| | 302 | 27,37 | | |
| | 196 | 18,23 | | |
| | 195 | 17,99 | | |
| 136 | | | -1,9 | 77,2 |
| | 152 | 39,37 | | |
| | 302 | 29,09 | | |
| | 196 | 19,26 | | |
| | 193 | 12,28 | | |

Tabelle VII (Fortsetzung)

| Beispiel Nr. | Mischung aus Verbindung der Formel | Mol% | $T_F$ (°C) | $T_C$ (°C) |
|---|---|---|---|---|
| 137 | | | -1,8 | 73,9 |
| | 152 | 39,59 | | |
| | 302 | 29,21 | | |
| | 195 | 18,87 | | |
| | 193 | 12,33 | | |
| 138 | | | -1,0 | 72,6 |
| | 152 | 40,84 | | |
| | 202 | 20,20 | | |
| | 196 | 19,76 | | |
| | 195 | 19,20 | | |
| 139 | | | 1,0 | 74,6 |
| | 152 | 44,32 | | |
| | 202 | 21,33 | | |
| | 196 | 20,93 | | |
| | 193 | 13,42 | | |
| 140 | | | 1,2 | 70,8 |
| | 152 | 44,77 | | |
| | 202 | 21,48 | | |
| | 195 | 20,23 | | |
| | 193 | 13,52 | | |
| 141 | | | 0,4 | 76,1 |
| | 152 | 43,25 | | |
| | 196 | 20,57 | | |
| | 195 | 19,84 | | |
| | 203 | 16,34 | | |
| 142 | | | 3,2 | 81,1 |
| | 152 | 48,35 | | |
| | 196 | 22,26 | | |
| | 195 | 21,14 | | |
| | 201 | 8,25 | | |
| 143 | | | 2,4 | 78,4 |
| | 152 | 46,80 | | |
| | 196 | 21,75 | | |
| | 203 | 17,47 | | |
| | 193 | 13,97 | | |
| 144 | | | 5,2 | 84,3 |
| | 152 | 52,41 | | |
| | 196 | 23,56 | | |
| | 193 | 15,21 | | |
| | 201 | 8,82 | | |
| 145 | | | 2,7 | 74,3 |
| | 152 | 47,36 | | |
| | 195 | 20,89 | | |
| | 203 | 17,65 | | |
| | 193 | 14,10 | | |
| 146 | | | 5,7 | 79,6 |
| | 152 | 53,31 | | |
| | 195 | 22,35 | | |
| | 193 | 15,40 | | |
| | 201 | 8,94 | | |

Tabelle VII (Fortsetzung)

| Beispiel Nr. | Mischung aus Verbindung der Formel | Mol% | $T_F$ (°C) | $T_C$ (°C) |
|---|---|---|---|---|
| 147 | | | -14,4 | 76,0 |
| | 149 | 45,73 | | |
| | 302 | 19,08 | | |
| | 196 | 13,16 | | |
| | 195 | 13,83 | | |
| | 193 | 8,20 | | |
| 148 | | | -12,5 | 74,4 |
| | 149 | 48,15 | | |
| | 202 | 14,58 | | |
| | 196 | 13,99 | | |
| | 195 | 14,53 | | |
| | 193 | 8,75 | | |
| 149 | | | -11,0 | 77,8 |
| | 149 | 50,14 | | |
| | 196 | 14,68 | | |
| | 195 | 15,11 | | |
| | 203 | 10,86 | | |
| | 193 | 9,21 | | |
| 150 | | | -11,6 | 76,0 |
| | 152 | 26,00 | | |
| | 178 | 23,72 | | |
| | 302 | 21,04 | | |
| | 196 | 14,38 | | |
| | 195 | 14,86 | | |
| 151 | | | -10,1 | 76,9 |
| | 152 | 27,83 | | |
| | 178 | 25,41 | | |
| | 302 | 22,19 | | |
| | 196 | 15,09 | | |
| | 193 | 9,48 | | |
| 152 | | | -10,2 | 74,7 |
| | 152 | 27,72 | | |
| | 178 | 25,30 | | |
| | 302 | 22,12 | | |
| | 195 | 15,41 | | |
| | 193 | 9,45 | | |
| 153 | | | -9,9 | 73,8 |
| | 152 | 28,02 | | |
| | 178 | 25,58 | | |
| | 202 | 15,73 | | |
| | 196 | 15,16 | | |
| | 195 | 15,50 | | |
| 154 | | | -8,3 | 74,7 |
| | 152 | 30,07 | | |
| | 178 | 27,47 | | |
| | 202 | 16,48 | | |
| | 196 | 15,93 | | |
| | 193 | 10,04 | | |

Tabelle VII (Fortsetzung)

| Beispiel Nr. | Mischung aus Verbindung der Formel | Mol% | $T_F$ (°C) | $T_C$ (°C) |
|---|---|---|---|---|
| 155 | | | -8,4 | 72,3 |
| | 152 | 30,00 | | |
| | 178 | 27,41 | | |
| | 202 | 16,46 | | |
| | 195 | 16,11 | | |
| | 193 | 10,02 | | |
| 156 | | | -7,1 | 78,0 |
| | 152 | 31,63 | | |
| | 178 | 28,92 | | |
| | 196 | 16,51 | | |
| | 203 | 12,52 | | |
| | 193 | 10,43 | | |
| 157 | | | -7,2 | 75,5 |
| | 152 | 31,59 | | |
| | 178 | 28,88 | | |
| | 195 | 16,60 | | |
| | 203 | 12,51 | | |
| | 193 | 10,42 | | |
| 158 | | | -12,2 | 76,1 |
| | 152 | 25,34 | | |
| | 177 | 25,28 | | |
| | 302 | 20,62 | | |
| | 196 | 14,12 | | |
| | 195 | 14,64 | | |
| 159 | | | -10,5 | 76,8 |
| | 152 | 27,29 | | |
| | 177 | 26,65 | | |
| | 302 | 21,85 | | |
| | 196 | 14,88 | | |
| | 193 | 9,34 | | |
| 160 | | | -10,6 | 74,8 |
| | 152 | 27,15 | | |
| | 177 | 26,55 | | |
| | 302 | 21,77 | | |
| | 195 | 15,23 | | |
| | 193 | 9,30 | | |
| 161 | | | -10,4 | 73,8 |
| | 152 | 27,46 | | |
| | 177 | 26,76 | | |
| | 202 | 15,52 | | |
| | 196 | 14,94 | | |
| | 195 | 15,32 | | |
| 162 | | | -8,6 | 74,7 |
| | 152 | 29,67 | | |
| | 177 | 28,28 | | |
| | 202 | 16,34 | | |
| | 196 | 15,78 | | |
| | 193 | 9,94 | | |

Tabelle VII (Fortsetzung)

| Beispiel Nr. | Mischung aus Verbindung der Formel | Mol% | $T_F$ (°C) | $T_C$ (°C) |
|---|---|---|---|---|
| 163 | | | -8,7 | 72,4 |
| | 152 | 29,58 | | |
| | 177 | 28,22 | | |
| | 202 | 16,30 | | |
| | 195 | 15,99 | | |
| | 193 | 9,92 | | |
| 164 | | | -7,3 | 78,0 |
| | 152 | 31,37 | | |
| | 177 | 29,42 | | |
| | 196 | 16,41 | | |
| | 203 | 12,43 | | |
| | 193 | 10,36 | | |
| 165 | | | -7,4 | 75,5 |
| | 152 | 31,32 | | |
| | 177 | 29,39 | | |
| | 195 | 16,52 | | |
| | 203 | 12,42 | | |
| | 193 | 10,35 | | |
| 166 | | | -7,0 | 77,5 |
| | 152 | 31,85 | | |
| | 301 | 24,40 | | |
| | 196 | 16,59 | | |
| | 195 | 16,67 | | |
| | 193 | 10,48 | | |
| 167 | | | -8,8 | 72,5 |
| | 152 | 29,39 | | |
| | 302 | 23,16 | | |
| | 166 | 15,84 | | |
| | 196 | 15,68 | | |
| | 195 | 15,93 | | |
| 168 | | | -7,2 | 73,3 |
| | 152 | 31,53 | | |
| | 302 | 24,46 | | |
| | 166 | 17,13 | | |
| | 196 | 16,47 | | |
| | 193 | 10,40 | | |
| 169 | | | -7,2 | 70,8 |
| | 152 | 31,50 | | |
| | 302 | 24,44 | | |
| | 166 | 17,10 | | |
| | 195 | 16,57 | | |
| | 193 | 10,40 | | |
| 170 | | | -7,6 | 71,0 |
| | 152 | 30,95 | | |
| | 302 | 24,11 | | |
| | 196 | 16,26 | | |
| | 195 | 16,40 | | |
| | 203 | 12,29 | | |

Tabelle VII (Fortsetzung)

| Beispiel Nr. | Mischung aus Verbindung der Formel | Mol% | $T_F$ (°C) | $T_C$ (°C) |
|---|---|---|---|---|
| 171 | | | -7,0 | 88,1 |
| | 152 | 31,75 | | |
| | 302 | 24,59 | | |
| | 196 | 16,55 | | |
| | 195 | 16,64 | | |
| | 193 | 10,46 | | |
| 172 | | | -5,7 | 74,5 |
| | 152 | 33,67 | | |
| | 302 | 25,74 | | |
| | 196 | 17,25 | | |
| | 195 | 17,21 | | |
| | 201 | 6,13 | | |
| 173 | | | -5,9 | 71,9 |
| | 152 | 33,36 | | |
| | 302 | 25,56 | | |
| | 196 | 17,14 | | |
| | 203 | 13,10 | | |
| | 193 | 10,85 | | |
| 174 | | | -3,8 | 75,9 |
| | 152 | 36,36 | | |
| | 302 | 27,33 | | |
| | 196 | 18,21 | | |
| | 193 | 11,57 | | |
| | 201 | 6,53 | | |
| 175 | | | -3,8 | 72,9 |
| | 152 | 36,46 | | |
| | 302 | 27,39 | | |
| | 195 | 18,00 | | |
| | 193 | 11,60 | | |
| | 201 | 6,55 | | |
| 176 | | | -5,1 | 70,6 |
| | 152 | 34,44 | | |
| | 166 | 18,88 | | |
| | 202 | 18,04 | | |
| | 196 | 17,53 | | |
| | 193 | 11,11 | | |
| 177 | | | -3,9 | 73,9 |
| | 152 | 36,24 | | |
| | 166 | 19,99 | | |
| | 196 | 18,17 | | |
| | 203 | 14,06 | | |
| | 193 | 11,55 | | |
| 178 | | | -3,8 | 70,8 |
| | 152 | 36,33 | | |
| | 166 | 20,04 | | |
| | 195 | 17,97 | | |
| | 203 | 14,09 | | |
| | 193 | 11,57 | | |

Tabelle VII (Fortsetzung)

| Beispiel Nr. | Mischung aus Verbindung der Formel | Mol% | $T_F$ (°C) | $T_C$ (°C) |
|---|---|---|---|---|
| 179 | | | -4,7 | 86,4 |
| | 152 | 35,09 | | |
| | 202 | 18,27 | | |
| | 196 | 17,76 | | |
| | 195 | 17,62 | | |
| | 193 | 11,27 | | |
| 180 | | | -3,1 | 71,7 |
| | 152 | 37,41 | | |
| | 202 | 19,06 | | |
| | 196 | 18,58 | | |
| | 195 | 18,27 | | |
| | 201 | 6,69 | | |
| 181 | | | -1,2 | 73,3 |
| | 152 | 40,54 | | |
| | 202 | 20,10 | | |
| | 196 | 19,66 | | |
| | 193 | 12,55 | | |
| | 201 | 7,14 | | |
| 182 | | | -3,3 | 90,3 |
| | 152 | 37,17 | | |
| | 196 | 18,49 | | |
| | 195 | 18,20 | | |
| | 203 | 14,36 | | |
| | 193 | 11,77 | | |
| 183 | | | -1,8 | 75,0 |
| | 152 | 39,61 | | |
| | 196 | 19,34 | | |
| | 195 | 18,87 | | |
| | 203 | 15,16 | | |
| | 201 | 7,01 | | |
| 184 | | | 0,1 | 77,0 |
| | 152 | 42,82 | | |
| | 196 | 20,43 | | |
| | 203 | 16,20 | | |
| | 193 | 13,08 | | |
| | 201 | 7,47 | | |
| 185 | | | 0,4 | 73,2 |
| | 152 | 43,18 | | |
| | 195 | 19,82 | | |
| | 203 | 16.32 | | |
| | 193 | 13,16 | | |
| | 201 | 7,52 | | |
| 186 | | | -12,2 | 76,3 |
| | 153 | 27,61 | | |
| | 178 | 23,07 | | |
| | 302 | 20,60 | | |
| | 196 | 14,10 | | |
| | 195 | 14,63 | | |

Tabelle VII (Fortsetzung)

| Beispiel Nr. | Mischung aus Verbindung der Formel | Mol% | $T_F$ (°C) | $T_C$ (°C) |
|---|---|---|---|---|
| 187 | | | -10,6 | 77,2 |
| | 153 | 29,34 | | |
| | 178 | 24,77 | | |
| | 302 | 21,76 | | |
| | 196 | 14,82 | | |
| | 193 | 9,30 | | |
| 188 | | | -10,8 | 75,2 |
| | 153 | 29,21 | | |
| | 178 | 24,65 | | |
| | 302 | 21,68 | | |
| | 195 | 15,18 | | |
| | 193 | 9,27 | | |
| 189 | | | -10,5 | 74,2 |
| | 152 | 29,47 | | |
| | 178 | 24,91 | | |
| | 202 | 15,46 | | |
| | 196 | 14,88 | | |
| | 195 | 15,27 | | |
| 190 | | | -8,8 | 75,2 |
| | 153 | 31,39 | | |
| | 178 | 26,83 | | |
| | 202 | 16,23 | | |
| | 196 | 15,67 | | |
| | 193 | 9,87 | | |
| 191 | | | -8,9 | 73,0 |
| | 153 | 31,31 | | |
| | 178 | 26,75 | | |
| | 202 | 16.20 | | |
| | 195 | 15,90 | | |
| | 193 | 9,85 | | |
| 192 | | | -7,6 | 78,7 |
| | 153 | 32,86 | | |
| | 178 | 28,31 | | |
| | 196 | 16,27 | | |
| | 203 | 12,30 | | |
| | 193 | 10,27 | | |
| 193 | | | -7,7 | 76,2 |
| | 153 | 32,81 | | |
| | 178 | 28,26 | | |
| | 195 | 16,40 | | |
| | 203 | 12,28 | | |
| | 193 | 10,25 | | |
| 194 | | | -12,9 | 76,3 |
| | 153 | 26,93 | | |
| | 177 | 24,73 | | |
| | 302 | 20,14 | | |
| | 196 | 13,82 | | |
| | 195 | 14,39 | | |

Tabelle VII (Fortsetzung)

| Beispiel Nr. | Mischung aus Verbindung der Formel | Mol% | $T_F$ (°C) | $T_C$ (°C) |
|---|---|---|---|---|
| 195 | | | -11,2 | 77,2 |
| | 153 | 28,77 | | |
| | 177 | 26,12 | | |
| | 302 | 21,38 | | |
| | 196 | 14,59 | | |
| | 193 | 9,15 | | |
| 196 | | | -11,3 | 75,1 |
| | 153 | 28,62 | | |
| | 177 | 26,01 | | |
| | 302 | 21,28 | | |
| | 195 | 14,98 | | |
| | 193 | 9,11 | | |
| 197 | | | -11,1 | 74,2 |
| | 153 | 28,88 | | |
| | 177 | 26,21 | | |
| | 202 | 15,22 | | |
| | 196 | 14,63 | | |
| | 195 | 15,07 | | |
| 198 | | | -9,2 | 75,2 |
| | 153 | 30,95 | | |
| | 177 | 27,76 | | |
| | 202 | 16,05 | | |
| | 196 | 15,49 | | |
| | 193 | 9,75 | | |
| 199 | | | -9,3 | 73,0 |
| | 153 | 30,85 | | |
| | 177 | 27,68 | | |
| | 202 | 16,01 | | |
| | 195 | 15,74 | | |
| | 193 | 9,72 | | |
| 200 | | | -7,9 | 78,7 |
| | 153 | 32,55 | | |
| | 177 | 28,94 | | |
| | 196 | 16,14 | | |
| | 203 | 12,19 | | |
| | 193 | 10,18 | | |
| 201 | | | -7,9 | 76,2 |
| | 153 | 32,49 | | |
| | 177 | 28,89 | | |
| | 195 | 15,29 | | |
| | 203 | 12,16 | | |
| | 193 | 10,17 | | |
| 202 | | | -7,5 | 78,2 |
| | 153 | 32,99 | | |
| | 301 | 23,93 | | |
| | 196 | 16,32 | | |
| | 195 | 16,46 | | |
| | 193 | 10,30 | | |

Tabelle VII (Fortsetzung)

| Beispiel Nr. | Mischung aus Verbindung der Formel | Mol% | $T_F$ (°C) | $T_C$ (°C) |
|---|---|---|---|---|
| 203 | | | -9,4 | 73,1 |
| | 153 | 30,75 | | |
| | 302 | 22,72 | | |
| | 166 | 15,42 | | |
| | 196 | 15,41 | | |
| | 195 | 15,71 | | |
| 204 | | | -7,7 | 74,0 |
| | 153 | 32,76 | | |
| | 302 | 24,06 | | |
| | 166 | 16,72 | | |
| | 196 | 16,22 | | |
| | 193 | 10,24 | | |
| 205 | | | -7,7 | 71,6 |
| | 153 | 32,70 | | |
| | 302 | 24,02 | | |
| | 166 | 16,69 | | |
| | 195 | 16,36 | | |
| | 193 | 10,23 | | |
| 206 | | | -8,2 | 71,8 |
| | 153 | 32,15 | | |
| | 302 | 23,65 | | |
| | 196 | 15,98 | | |
| | 195 | 16,18 | | |
| | 203 | 12,04 | | |
| 207 | | | -7,6 | 88,6 |
| | 153 | 32,89 | | |
| | 302 | 24,14 | | |
| | 196 | 16,28 | | |
| | 195 | 16,42 | | |
| | 193 | 10,27 | | |
| 208 | | | -6,2 | 75,4 |
| | 153 | 34,66 | | |
| | 302 | 25,32 | | |
| | 196 | 16,99 | | |
| | 195 | 17,00 | | |
| | 201 | 6,03 | | |

Die erfindungsgemaessen FK-Mischungen eignen sich insbesondere fuer die ueblichen Drehzellen. Sie koennen ferner mit Vorteil auch fuer FK-Anzeigen verwendet werden, die nach dem sogenannten Guest/Host-Prinzip arbeiten und eine Farbstoffkomponente als « Guest »-Anteil in einer nematischen « Host »-Phase und gegebenenfalls eine optisch aktive (« cholesterische ») Komponente enthalten. Erfindungsgemaesse FK-Mischungen fuer diese Zwecke enthalten zusaetzlich zu der Mischung aus der nitrilfreien Komponente (A) und der Nitrilkomponente (B) ausserdem die Farbstoffkomponente und gegebenenfalls die cholesterische Komponente als restlichen Anteil von bis zu etwa 10 Mol%. Geeignete dichroitische Farbstoffe bzw. Farbstoffmischungen und cholesterische Komponenten sind in der Literatur, z. B. den DE-A 2 627 215 und 2 658 568, beschrieben und technisch erhaeltlich.

**Ansprueche**

1. Fluessigkristallmischung mit einer insgesamt positiven DK-Anisotropie, bestehend im wesentlichen aus einer hoechstens schwach polaren (DKA $\leq$ 3), anisotropen und nitrilfreien Komponente (A) und einer stark polaren (DKA $\leq$ 4) anisotropen Nitrilkomponente (B), dadurch gekennzeichnet, dass

a) die nitrilfreie Komponente (A) aus 1 bis 5 Verbindungen der Formel (1)

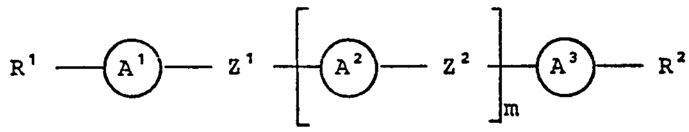

(1)

in der $R^1$, $R^2$ jeweils gleich oder verschieden und Gruppen der Formeln $CH_3(CH_2)_n—$, $CH_3(CH_2)_{n-1}NH—$, $CH_3(CH_2)_{n-2}\underset{\overset{\|}{O}}{C}—O—$, $CH_3(CH_2)_{n-2}O\underset{\overset{\|}{O}}{C}—$ oder $CH_3(CH_2)_{n-1}—O—$

sind, worin n eine Zahl von Null bis 11 ist, $A^1$, $A^2$ und $A^3$ jeweils einen Ring der Formeln (1a) bis (1g)

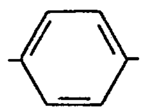

(1a)

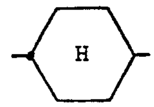

(trans)
(1b)

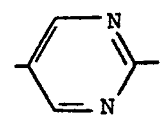

(1c)

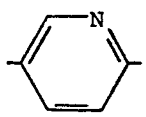

(1d)

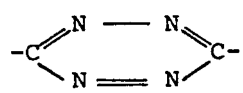

(1e)

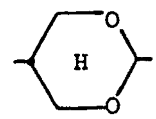

(trans)
(1f)

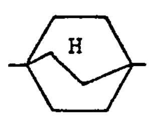

(1g)

darstellen, m Null, Eins oder Zwei ist und $Z^1$ und $Z^2$ gleich oder verschieden sind und Kovalenzbindungen, die Methylenoxy- ($—CH_2O—$), Ethylen- ($—CH_2—CH_2—$) oder Carboxylgruppen ($—\underset{\overset{\|}{O}}{C}—O—$) mit

der Massgabe darstellen, dass $Z^1$ und $Z^2$ nicht beide die Carboxylgruppe bedeuten,

b) die Nitrilkomponente (B) aus 1 bis 5 Verbindungen der Formel (2)

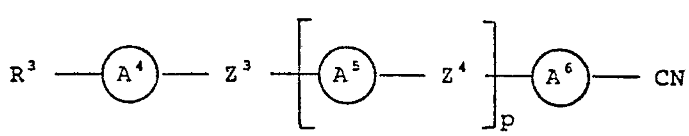

(2)

in der $R^3$ eine Gruppe der Formeln $CH_3(CH_2)_r—$, $CH_3(CH_2)_{r-1}NH—$, $CH_3(CH_2)_{r-2}\underset{\overset{\|}{O}}{C}—O—$, $CH_3(CH_2)_{r-2}O\underset{\overset{\|}{O}}{C}—$

oder $CH_3(CH_2)_{r-1}—O—$ ist, worin r eine Zahl von Null bis Elf darstellt, p Null oder Eins ist, $Z^3$ und $Z^4$ die oben fuer $Z^1$ und $Z^2$ genannte Bedeutung haben und $A^4$, $A^5$ und $A^6$ Ringe der Formeln (1a), (1b), (1c), (1d), (1e), (1f) oder (1g) mit der Massgabe darstellen, dass $Z^3$ und $Z^4$ nicht beide die Carboxylgruppe bedeuten und dass $Z^3$ nicht die Carboxylgruppe ist, wenn p Null ist und $A^4$ den Ring der Formel (1b) bedeutet,

c) die nitrilfreie Komponente (A) 50 bis 95 Mol% der Mischung aus (A) und (B) bildet und

d) entweder die nitrilfreie Komponente (A) ausschliesslich aus Verbindungen der Formel (1) besteht, bei welchen in einer der Gruppen $R^1$, $R^2$ $n \leq 2$, oder die Nitrilkomponente (B) ausschliesslich aus Verbindungen der Formel (2) besteht, bei welchen in der Gruppe $R^3$ $r \leq 2$.

2. Mischung nach Anspruch 1, dadurch gekennzeichnet, dass sie aus hoechstens 6 Verbindungen und z. B. insgesamt aus 3 bis 5 Verbindungen besteht.

3. Mischung nach Anspruch 1 oder 2, dadurch gekennzeichnet, dass die Nitrilkomponente (B) fuer sich eine positive DKA von mindestens 8 besitzt.

4. Mischung nach einem der Ansprueche 1-3, bei welcher die nitrilfreie Komponente (A) ausschliesslich aus Verbindungen der Formel (1) besteht, bei welcher in einer der Gruppen $R^1$, $R^2$ der Wert von $n \leqslant 2$, dadurch gekennzeichnet, dass in der anderen Gruppe $R^2$, $R^1$ n einen Wert von $\geqslant 2$, vorzugsweise $\geqslant 4$ hat.

5. Mischung nach Anspruch 4, dadurch gekennzeichnet, dass die Komponente (B) aus Verbindungen der Formel (2) besteht, bei welchen in der Gruppe $R^3$ n einen Wert von $\geqslant 2$, vorzugsweise $\geqslant 4$ hat.

6. Mischung nach einem der Ansprueche 1-3, bei welcher die Nitrilkomponente (B) ausschliesslich aus Verbindungen der Formel (2) besteht, bei welcher in der Gruppe $R^3$ der Wert von $r \leqslant 2$, dadurch gekennzeichnet, dass die nitrilfreie Komponente (A) aus Verbindungen der Formel (1) besteht, in welchen in mindestens einer Gruppe $R^1$, $R^2$ den Wert von $n \geqslant 2$, vorzugsweise $\geqslant 4$ hat.

7. Mischung nach einem der Ansprueche 1-6, dadurch gekennzeichnet, dass sie eine Farbstoffkomponente und/oder eine cholesterische Komponente enthaelt.

**Claims**

1. Liquid crystal mixture possessing a net positive dielectric anisotropy consisting essentially of an at most weakly polar (DKA $\leqslant 3$) anisotropic and non-cyano component (A) and a strongly polar (DKA $\geqslant 4$) anisotropic cyano component (B), whereby,

a) the non-cyano component (A) consists of one to five compounds of formula (1)

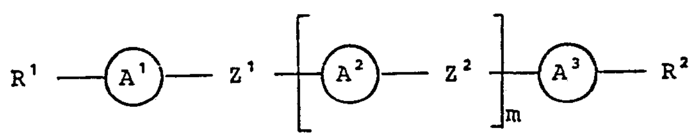

(1)

wherein $R^1$ and $R^2$ are the same or different and are groups of the formulae $CH_3(CH_2)_n—$, $CH_3(CH_2)_{n-1}NH—$, $CH_3(CH_2)_{n-2}C(=O)—O—$, $CH_3(CH_2)_{n-2}OC(=O)—$ or $CH_3(CH_2)_{n-1}—O—$ wherein n is an integer between 0 and 11, $A^1$, $A^2$ and $A^3$ each represent a ring of formula (1a) to (1g),

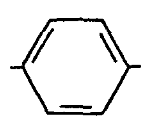

(1a)

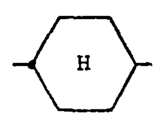

(trans)
(1b)

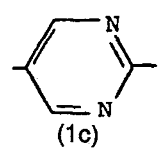

(1c)

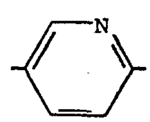

(1d)

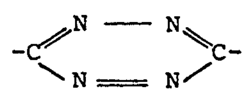

(1e)

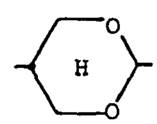

(trans)
(1f)

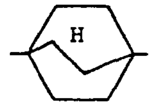

(1g)

m is zero, one or two, and $Z^1$ and $Z^2$ are the same or different and represent covalent bonds, methyleneoxy ($—OH_2O—$), ethylene ($—CH_2—CH_2—$) or carboxyl groups ($—C(=O)—O—$) with the provision that $Z^1$ and $Z^2$ cannot both be carboxyl groups at the same time,

b) the cyano component (B) consists of one to five compounds of formula (2)

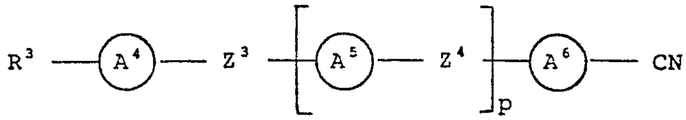

(2)

in which $R^3$ is a group of formulae $CH_3(CH_2)_r—$, $CH_3(CH_2)_{r-1}NH—$, $CH_3(CH_2)_{r-2}\underset{\underset{O}{\|}}{C}—O—$, $CH_3(CH_2)_{r-2}O\underset{\underset{O}{\|}}{C}—$ or $CH_3(CH_2)_{r-1}—O—$, wherein r is an integer from 0 to 11, p is zero or one, $Z^3$ and $Z^4$ have the meaning given above for $Z^1$ and $Z^2$ and $A^4$, $A^5$ and $A^6$ are rings of formulae (1a), (1b), (1c), (1d), (1e), (1f) or (1g) with the proviso that $Z^3$ and $Z^4$ are not both carboxyl groups and that $Z^3$ is not the carboxyl group when p is zero and $A^4$ is a ring of formula (1b),

c) the non-cyano component (A) forms 50 to 95 mole of the mixture of (A) and (B) and

d) either the non-cyano component (A) consists solely of compounds of formula (1) wherein in one of the groups $R^1$, $R^2$ $n \leqslant 2$, or the cyano component (B) consists solely of compounds of formula (2) wherein in the group $R^3$ $r \leqslant 2$.

2. Mixture according to Claim 1, characterized in that it contains at most six compounds and, for example, a total of three to five compounds.

3. Mixture according to Claim 1 or 2, characterized in that the cyano component (B) as such possesses a positive dielectric anisotropy of at least 8.

4. Mixture according to one of the Claims 1-3, wherein the non-cyano component (A) consists exclusively of compounds of formula (1) wherein in one of the groups $R^1$, $R^2$ $n \leqslant 2$, characterized in that in the other group $R^2$, $R^1$ n has a value of $\geqslant 2$, preferably $n \geqslant 4$.

5. Mixture according to Claim 4, characterized in that component (B) consists of compounds of formula (2), wherein in the group $R^3$ n has a value of $\geqslant 2$, preferably $\geqslant 4$.

6. Mixture according to one of the Claims 1-3, wherein the cyano component (B) consists exclusively of compounds of formula (2) wherein the group $R^3$ has the value $r \leqslant 2$, characterized in that the non-cyano component (A) consists of compounds of formula (1) in which in at least one of the groups $R^1$, $R^2$ has the value $n \geqslant 2$, preferably $\geqslant 4$.

7. Mixture according to one of the Claims 1-6, characterized in that it contains a dye component and/or a cholesteric component.

**Revendications**

1. Mélange de cristaux liquides présentant une anisotropie de constante diélectrique (ACD) globale positive, comprenant essentiellement un élément dépourvu de nitriles (A), anisotrope et au maximum légèrement polaire (ACD $\leqslant$ 3) et un élément nitrile (B), très polaire (ACD $\geqslant$ 4), caractérisé par le fait :

a) que l'élément dépourvu de nitriles (A) comprend 1 à 5 composés de la formule (1)

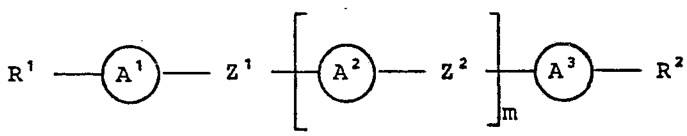

(1)

dans laquelle $R^1$, $R^2$ sont identiques ou différents et sont des groupements des formules $CH_3(CH_2)_n—$, $CH_3(CH_2)_{n-1}NH—$, $CH_3(CH_2)_{n-2}\underset{\underset{O}{\|}}{C}—O—$, $CH_3(CH_2)_{n-2}O\underset{\underset{O}{\|}}{C}—$ ou $CH_3(CH_2)_{n-1}—O—$, dans lesquelles n est un chiffre compris entre zéro et 11, $A^1$, $A^2$ et $A^3$ représentent chacun un noyau des formules (1a) à (1g),

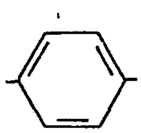

(1a)

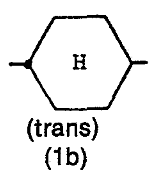

(trans)
(1b)

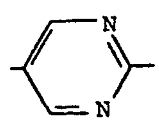

(1c)

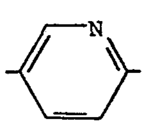

(1d)

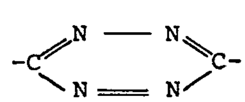

(1e)

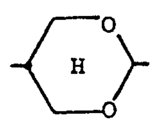

(trans)
(1f)

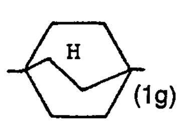

(1g)

m est égal à zéro, un ou deux et $Z^1$ et $Z^2$ sont identiques ou différents et représentent des liaisons covalentes, les groupements méthylène-oxy ($-CH_2O-$), éthylène ($-CH_2-CH_2-$) ou carboxyle ($-\underset{\underset{O}{\|}}{C}-O-$), étant entendu que $Z^1$ et $Z^2$ ne représentent pas tous deux le groupement carboxyle,

b) que l'élément nitrile (B) comprend 1 à 5 composés de la formule (2)

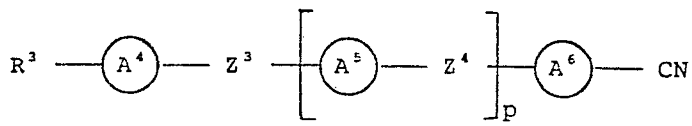

(2)

dans laquelle $R^3$ est un groupement des formules $CH_3(CH_2)_r-$, $CH_3(CH_2)_{r-1}NH-$, $CH_3(CH_2)_{r-2}\underset{\underset{O}{\|}}{C}-O-$, $CH_3(CH_2)_{r-2}O\underset{\underset{O}{\|}}{C}-$ ou $CH_3(CH_2)_{r-1}-O-$, dans lesquelles r représente un chiffre de zéro à onze, p est égal à zéro ou un, $Z^3$ et $Z^4$ ont la signification indiquée plus haut pour $Z^1$ et $Z^2$ et $A^4$, $A^5$ et $A^6$ représentent des noyaux des formules (1a), (1b), (1c), (1d), (1e), (1f) ou (1g), étant entendu que $Z^3$ et $Z^4$ ne représentent pas tous deux le groupement carboxyle, que $Z^3$ n'est pas le groupement carboxyle lorsque p est nul et $A^4$ représente le noyau de la formule (1b),

c) que l'élément dépourvu de nitriles (a) constitue 50 à 95 moles % du mélange de (A) et (B) et

d) que l'élément dépourvu de nitriles (A) comprend exclusivement des composés de la formule (1) pour lesquels n est $\leqslant 2$ dans un des groupements $R^1$, $R^2$ ou que l'élément nitrile (B) comprend exclusivement des composés de la formule (2), pour lesquels r est $\leqslant 2$ dans le groupement $R^3$.

2. Mélange selon la revendication 1, caractérisé par le fait qu'il comprend au maximum 6 composés et par exemple un total de 3 à 5 composés.

3. Mélange selon la revendication 1 ou 2, caractérisé par le fait que l'élément nitrile (B) possède en soi une anisotropie de constante diélectrique positive égale à 8 au minimum.

4. Mélange selon l'une des revendications 1 à 3, dans lequel l'élément dépourvu de nitriles (A) comprend exclusivement des composés de la formule (1), dans laquelle n est $\leqslant 2$ dans un des groupements $R^1$, $R^2$, caractérisé par le fait que n a une valeur $\geqslant 2$, et de préférence $\geqslant 4$, dans l'autre groupement $R^2$, $R^1$.

5. Mélange selon la revendication 4, caractérisé par le fait que l'élément (B) comprend des composés de la formule (2) pour lesquels n a une valeur $\geqslant 2$ et de préférence $\geqslant 4$ dans le groupement $R^3$.

6. Mélange selon l'une des revendications 1 à 3 dans lequel l'élément nitrile (B) comprend exclusivement des composés de la formule (2) dans laquelle r est $\leqslant 2$ dans le groupement $R^3$, caractérisé par le fait que l'élément dépourvu de nitriles (A) comprend des composés de la formule (1), pour lesquels n est $\geqslant 2$, et de préférence $\geqslant 4$ dans au moins un groupe $R^1$, $R^2$.

7. Mélange selon l'une des revendications 1 à 6, caractérisé par le fait qu'il contient un élément colorant et/ou un élément cholestérique.